# EUROPÄISCHE PATENTANMELDUNG

(11) **EP 0 891 900 A2**
(43) Veröffentlichungstag der Anmeldung: **20.01.1999**
(21) Anmeldenummer: 98111285.7
(22) Anmeldetag: 18.06.1998
(51) Int. Cl.: B60R 21/20

(54) **Airbagabdeckung**

(30) Priorität: 15.07.1997 DE 19730340
(71) Anmelder: TAKATA (EUROPE) VEHICLE SAFETY TECHNOLOGY GmbH, 89081 Ulm (DE)
(72) Erfinder: Wittmann, Robert, 89233 Neu-Ulm (DE); Niederkorn, Serge, 89075 Ulm (DE); Renz, Klaus, 89079 Ulm (DE); Wendt, Dieter, 89073 Ulm (DE); Albrecht, Thomas, 87784 Westerheim (DE); Bührlen, Karl-Heinz, 89079 Ulm-Donaustetten (DE); Heuschmid, Rainer, 86476 Neuburg-Halbertshofen (DE); Müller, Frank, 89134 Blaustein (DE); Früh, Hans J., 89188 Merklingen (DE)
(74) Vertreter: Manitz, Gerhart, Dr.

(57) **Zusammenfassung**

Eine Airbagabdeckung besteht aus einer kaschierten Abdeckplatte (10), an deren Rückseite ein umlaufender Wandabschnitt (12) angeordnet ist, der von dem Umfangsrand (14) der Abdeckplatte beabstandet ist, wodurch ein vorstehender Stegabschnitt (16) gebildet ist. An dem Wandabschnitt (12) und/oder der Abdeckplatte (16) sind mehrere Sollbruchstellen (18, 20, 22) derart angeordnet, daß sich bei Entfalten des Airbags die Abdeckplatte (10) zusammen mit ihrem Stegabschnitt (16) von dem Wandabschnitt (12) löst.

## Beschreibung

Die vorliegende Erfindung betrifft eine Airbagabdeckung nach dem Oberbegriff des Anspruchs 1. Derartige Airbagabdeckungen sind grundsätzlich bekannt und dienen dazu, den Luftsack des Airbags zusammen mit dem zugehörigen Gasgenerator formschön nach außen abzudecken. Damit sich die Airbagabdeckung bei Zünden des Gasgenerators und dem darauffolgenden Entfalten des Luftsacks öffnet, ist mindestens eine Sollbruchstelle an der Airbagabdeckung vorgesehen, an der die Airbagabdeckung aufgrund des hohen Drucks birst und sich öffnet.

In manchen Fällen kann es erforderlich sein, die Airbagabdeckung beispielsweise mit Stoff oder Leder zu kaschieren, damit diese an die Einbauumgebung angepaßt wird. In diesen Fällen wurde bislang vorgeschlagen, die Kaschierung, das heißt die Stoff- oder Lederbespannung im Bereich der Abdeckplatte ebenfalls mit einer Sollbruchstelle (Reißnaht) zu versehen, damit sich diese bei Zünden des Gasgenerators zuverlässig öffnet. Aufgrund der bestehenden Sicherheits- und Prüfvorschriften bringt dies jedoch erhebliche Nachteile mit sich, da in diesem Fall für jede unterschiedliche Kaschierung, das heißt für jeden unterschiedlichen Farb- und/oder Stoff- bzw. Ledertyp ein protokollierter Testversuch durchgeführt werden muß. Aufgrund der heutzutage üblichen Typen- und Farbenvielfalt kann dies für einen bestimmten Fahrzeugtyp bis zu 350 verschiedene Testversuche erfordern.

Sofern die Airbagabdeckung nicht selbst mit einer Kaschierung versehen ist, sondern unter einer Sitzbespannung oder dergleichen eingebaut wird, ergibt sich der weitere Nachteil, daß der Sitz erst dann mit der Bespannung versehen werden kann, nachdem die Airbagabdeckung in diesen eingebaut ist. Dies bringt ebenfalls Produktionsnachteile mit sich.

Es ist deshalb das der vorliegenden Erfindung zugrundeliegende Problem (Aufgabe), eine Airbagabdeckung nach dem Oberbegriff des Anspruchs 1 zu schaffen, die in Hinblick auf die oben erwähnten Probleme kostengünstiger hergestellt und eingebaut werden kann.

Die Lösung dieser Aufgabe erfolgt durch die Merkmale des Anspruchs 1 und insbesondere dadurch, daß die Sollbruchstelle an dem Wandabschnitt und/oder der Abdeckplatte derart angeordnet und dimensioniert ist, daß sich bei Entfalten des Airbags die Abdeckplatte zusammen mit ihrem Stegabschnitt zumindest teilweise von dem Wandabschnitt löst, und daß die Abdeckplatte mit einer Kaschierung versehen ist, die keine Sollbruchstelle aufweist.

Erfindungsgemäß öffnet sich die Abdeckplatte somit nicht mehr innerhalb des Wandabschnitts. Vielmehr löst sich die Abdeckplatte zusammen mit ihrem zugehörigen Stegabschnitt von dem Wandabschnitt. Hierdurch ist es möglich, die Kaschierung an der Abdeckplatte vorzusehen, wobei die Kaschierung keinerlei Sollbruchstellen bzw. Reißnähte aufweisen muß. Da sich bei der erfindungsgemäßen Airbagabdeckung die Abdeckplatte zusammen mit der darauf befindlichen Kaschierung öffnet, ist das Öffnungsverhalten der Airbagabdeckung unabhängig von der gewählten Kaschierung. Hierdurch können die erforderlichen Testversuche auf einige wenige Kaschierungen beschränkt werden, da beispielsweise die Verwendung eines gleichen Kaschierungsstoffes mit lediglich unterschiedlicher Farbgebung das Öffnungsverhalten der Airbagabdeckung nicht beeinflußt. Falls die erfindungsgemäße Airbagabdeckung in einem Fahrzeugsitz eingebaut wird, kann dies nach vollständiger Montage bzw. Herstellung des Sitzes erfolgen. Hierdurch ist die Fertigung des Fahrzeugsitzes nicht mehr von dem Einbau der Airbagabdeckung abhängig.

Vorteilhafte Ausführungsformen der Erfindung sind in der Beschreibung, den Zeichnungen sowie den Unteransprüchen beschrieben.

Nach einer ersten vorteilhaften Ausführungsform ist die Kaschierung auch an der Unterseite des Stegabschnitts befestigt. Diese Ausführungsform besitzt den Vorteil, daß sich die Kaschierung um den Stegabschnitt umlegen und an dessen Unterseite befestigen läßt, wodurch sich ein ansprechendes Äußeres ergibt.

Nach einer weiteren Ausführungsform der Erfindung kann die Sollbruchstelle an dem Wandabschnitt oder in dem Übergangsbereich zwischen dem Wandabschnitt und der Abdeckplatte angeordnet sein. Grundsätzlich ist es auch möglich, die Sollbruchstelle in der Abdeckplatte vorzusehen, solange die als Sollbruchstelle vorgesehene Materialschwächung so dimensioniert und orientiert ist, daß sich der Stegabschnitt der Abdeckplatte zusammen mit der Abdeckplatte selbst von dem Wandabschnitt löst, wenn der Gasgenerator gezündet wird.

Nach einer weiteren Ausbildung der Erfindung ist die Sollbruchstelle an der Innenseite und/oder an der Außenseite des Wandabschnitts angeordnet. Auf diese Weise ist besonders gut sichergestellt, daß der Stegabschnitt nicht an dem Wandabschnitt verbleibt, sondern sich zusammen mit der Abdeckplatte von dem Wandabschnitt löst. Die Sollbruchstelle kann ausschließlich an der Innenseite des Wandabschnitts vorgesehen sein, kann sich jedoch auch teilweise oder insgesamt an der Außenseite des Wandabschnitts befinden. Ein abwechselndes Vorsehen von Sollbruchstellen an der Innenseite und der Außenseite des Wandabschnittes kann bei der Herstellung, das heißt beim Anfertigen der Preßform zu Vorteilen führen.

Ein besonders vorteilhaftes Verfahren zum Herstellen einer erfindungsgemäßen Airbagabdeckung besteht darin, daß zunächst die gewünschte Kaschierung der Airbagabdeckung in eine Spritzgußform eingelegt wird und anschließend Material unter Druck in die Form eingespritzt wird. Nach Öffnen der Form kann die vollständig kaschierte Airbagabdeckung aus der Spritzgußform entnommen werden. In Verbindung mit der erfindungsgemäßen Airbagabdeckung bietet dieses Verfahren besondere Vorteile, da die Kaschierung nicht mit einer Sollbruchstelle versehen ist und somit weder speziell präpariert werden muß, noch in der Spritzgußform ausgerichtet werden muß. Somit wird diese Verfahrensweise erst durch das Vorsehen der erfindungsgemäßen Airbagabdeckung möglich.

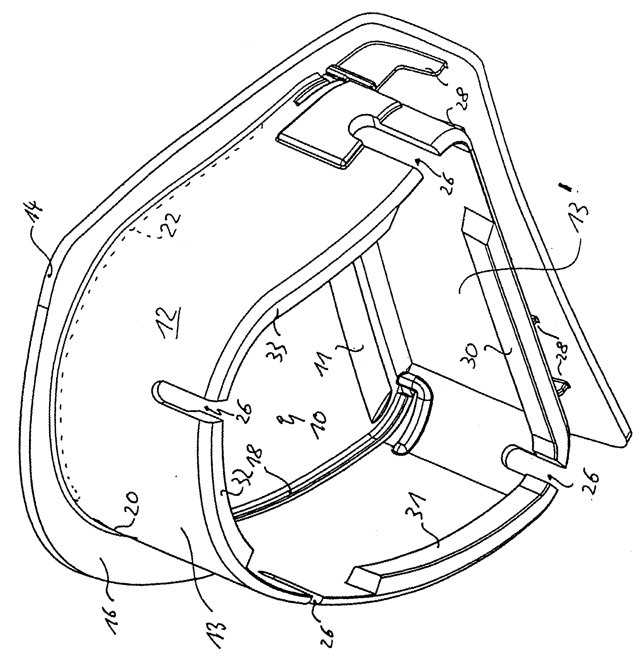

Nachfolgend wird die vorliegende Erfindung rein beispielhaft anhand einer vorteilhaften Ausführungsform und unter Bezugnahme auf die beigefügte Zeichnung beschrieben.

Die Figur zeigt eine perspektivische Ansicht von schräg unten auf eine Airbagabdeckung gemäß der Erfindung, wobei die vorhandene Kaschierung nicht dargestellt ist.

Die in der Figur dargestellte Airbagabdeckung ist einstückig aus Kunststoff hergestellt und besteht aus einer Abdeckplatte 10, an deren Vorderseite die Kaschierung angeordnet ist und von deren Rückseite sich rechtwinklig ein umlaufender Wandabschnitt 12 erstreckt, der vom Umfangsrand 14 der Abdeckplatte 10 beabstandet ist, das heißt, daß ein umlaufender Stegabschnitt 16 gebildet ist, der über den Wandabschnitt 12 nach außen vorsteht.

Der Wandabschnitt 12 weist verschiedene Montageöffnungen 26 (Schlitze) auf, die sich vom unteren Rand des Wandabschnitts 12 nach oben erstrecken. Bei dem dargestellten Ausführungsbeispiel besitzt der Wandabschnitt 12 in der Draufsicht im wesentlichen die Form eines "D", das heißt, daß der Wandabschnitt 12 einen gekrümmt verlaufenden Abschnitt 13 und einen ebenen Abschnitt 13' aufweist. An der Unterseite der Abdeckplatte 10 ist nahe dem Abschnitt 13' eine Materialschwächung 11 vorgesehen, die sich im wesentlichen parallel zu dem ebenen Abschnitt 13' erstreckt und als Scharnier für die Abdeckplatte 10 dient, was nachfolgend noch genauer erläutert wird. Ferner ist die Abdeckplatte 10 außerhalb des ebenen Abschnitts 13' des Wandabschnitts 12 nach unten abgewinkelt und durch Stege 28 mit der Außenseite des Abschnitts 13' verbunden.

Am unteren Rand des ebenen Abschnitts 13' ist ein länglicher Vorsprung 30 und am unteren Rand des Wandabschnitts 12 sind drei weitere längliche Vorsprünge 31, 32 und 33 vorgesehen. Sämtliche Vorsprünge sind einstückig mit dem Wandabschnitt 12 bzw. dem ebenen Abschnitt 13' ausgebildet und dienen dazu, die Airbagabdeckung auf dem zugehörigen Unterteil aufzubringen. Durch entsprechende Befestigungsmittel am Unterteil des Airbaggehäuses läßt sich die erfindungsgemäße Airbagabdeckung auf einfachste Weise montieren, indem diese auf das Airbaggehäuse aufgesetzt wird. Bei vollständigem Aufsetzen der Airbagabdeckung verrasten die länglichen Vorsprünge 30, 31, 32 und 33 mit den entsprechenden Befestigungsmitteln am Airbaggehäuse, wodurch eine schnelle und einfache Montage gewährleistet ist.

An der Innenseite des Wandabschnitts 12, und zwar an dem Übergangsbereich zwischen dem Wandabschnitt 12 und der Abdeckplatte 10 befinden sich zwei längliche Sollbruchstellen 18, 22, die sich jeweils etwa vom ebenen Abschnitt 13' entlang des gekrümmten Abschnittes 13 soweit erstrecken, daß noch ein Abstand zwischen ihnen verbleibt. Zwischen diesen beiden innenliegenden Sollbruchstellen 18 und 22 ist an der Außenseite des Wandabschnitts 12 ebenfalls in der Kante zwischen Wandabschnitt 12 und Abdeckplatte 10 bzw. Stegabschnitt 16 eine weitere Sollbruchstelle 20 vorgesehen.

Die in der Figur dargestellte Airbagabdeckung wird in einem Fahrzeug so montiert, daß sich innerhalb der Abdeckung der zusammengefaltete Luftsack befindet. Bei Zünden des mit dem Luftsack verbundenen Gasgenerators wird das Innere des Luftsacks unter hohen Druck gesetzt, wodurch sich der Luftsack zunächst innerhalb der Airbagabdeckung entfaltet. Nachdem der Innendruck innerhalb des Luftsacks einen bestimmten Wert überschritten hat, wird die Abdeckplatte 10 im Bereich der Sollbruchstellen 18, 20, 22 von dem Wandabschnitt 12 abgesprengt, worauf die Abdeckplatte 10 um die als Scharnier wirkende Materialschwächung 11 nach oben klappt. Da erfindungsgemäß die Sollbruchstellen 18, 20 und 22 im Übergangsbereich zwischen dem Wandabschnitt 12 und der Abdeckplatte 10 angeordnet sind und entsprechend dimensioniert sind, verbleibt beim Absprengen der Abdeckplatte 10 der Stegabschnitt 16 einstückig an der Abdeckplatte 10 und nicht an dem Wandabschnitt 12. Derjenige Bereich der Abdeckplatte 10, der sich jenseits der Materialschwächung 11 befindet und der um den ebenen Abschnitt 13' des Wandabschnitts 12 herumgezogen ist, verbleibt einstückig an dem Wandabschnitt 12.

Die Abdeckplatte 10 kann auf einfache Weise mit einer Kaschierung aus Stoff, Kunststoff oder Leder versehen werden, die dann vorzugsweise um den Stegabschnitt 16 herumgeführt und auch an der Unterseite des Stegabschnitts 16 befestigt ist. Eine derartige Kaschierung beeinträchtigt das Öffnungsverhalten der Airbagabdeckung nicht, da sie nicht über eine der Sollbruchstellen 18, 20, 22 hinaus erstreckt und den Biegevorgang im Bereich der Materialschwächung 11 praktisch kein Widerstand entgegensetzt. Die Kaschierung weist also selbst keine Sollbruchstelle auf und muß von der Abdeckplatte nicht durchstoßen werden.

Die Sollbruchstellen der erfindungsgemäßen Airbagabdeckung können entweder vollständig im Wandabschnitt 12 oder im Übergangsbereich, das heißt in der Kante zwischen dem Wandabschnitt 12 und der Abdeckplatte 10 vorgesehen sein. Auch ist es möglich, die Sollbruchstelle ausschließlich in der Abdeckplatte 10 vorzusehen. In diesem Fall muß jedoch die Tiefe der Materialschwächung und die Orientierung der Materialschwächung so gewählt werden, daß sich der abzusprengende Bereich der Abdeckplatte zusammen mit dem an diesen Bereich angrenzenden Stegabschnitt von dem Wandabschnitt löst. Der vorstehende Stegabschnitt 16 muß sich nicht vollständig, das heißt über den gesamten Umfang, von dem Wandabschnitt 12 lösen. Vielmehr ist es ausreichend, daß sich der Stegabschnitt 16 zusammen mit der Abdeckplatte 10 nur in demjenigen Bereich löst, der für das ordnungsgemäße Entfalten des Luftsacks ausreichend und erforderlich ist.

Die erfindungsgemäße Airbagabdeckung läßt sich mit Hilfe der grundsätzlich bereits bekannten Niederdrucktechnik vorteilhaft bereits kaschiert herstellen, indem die Kaschierung, die nicht mit einer Reißnaht versehen sein muß, in eine Spritzgußform eingelegt wird. Nach Schließen der Form und Einspritzen von Kunststoffmaterial unter Druck in die Form und nach entsprechendem Abkühlen kann die Spritzgußform geöffnet werden und die bereits kaschierte Abdeckung kann aus der Form entnommen werden. Diese Herstellungsweise ist erst aufgrund der erfindungsgemäßen Airbagabdeckung mit vertretbarem Aufwand möglich geworden, da die Kaschierung nicht mit einer Reißnaht versehen werden muß und demnach nicht in der Form entsprechend ausgerichtet werden muß.

Sofern in bevorzugter Weise die Kaschierung seitlich über die Abdeckplatte 10 vorsteht und nach unten um den Stegabschnitt 16 umgeschlagen wird, kann die Spritzgußform so modifiziert werden, daß das Umschlagen und Festkleben des umgeschlagenen Bereichs der Kaschierung automatisch im Anschluß an den Spritzgußformvorgang erfolgt. Es ist aber auch möglich, die Airbagabdeckung nach dem Aufspritzen auf die Kaschierung mit noch nicht umgeschlagenem überstehenden Rand aus der Spritzgußform zu entnehmen und das Umschlagen und Festkleben des überstehenden Randes der Kaschierung an der Rückseite des Stegabschnitts 16 von Hand vorzunehmen.

Eine dritte Möglichkeit der Anbringung der Kaschierung besteht darin, daß zunächst die Airbagabdeckung ohne Kaschierung in der Spritzgußform vollständig hergestellt und die Kaschierung erst anschließend von Hand oder durch eine geeignete Vorrichtung aufgebracht und der überstehende Rand um den Stegabschnitt 16 herumgeschlagen und dort befestigt wird.

Der umlaufende Wandabschnitt 12 der erfindungsgemäßen Airbagabdeckung erstreckt sich im wesentlichen senkrecht zu der Abdeckplatte 10, muß jedoch nicht unbedingt vollständig geschlossen umlaufen. Neben den dargestellten Montageschlitzen 26 können auch weitere Unterbrechungen oder dergleichen vorgesehen sein, in die beispielsweise ein Gehäuse des Gasgenerators oder dergleichen eingreift. Auch ist es möglich, den umlaufenden Wandabschnitt 12 in einzelne Stege aufzulösen, die mit den entsprechenden Sollbruchstellen versehen sind. Auch in diesem Fall müßte der Bereich zwischen den Stegen durch ein anderes Bauteil oder Gehäuseteil geschlossen werden. Die erfindungsgemäße Airbagabdeckung läßt sich besonders vorteilhaft bei einem Seitenairbag einsetzen. Jedoch ist auch jede andere Anwendung, beispielsweise in einem lederkaschierten Lenkrad oder dergleichen möglich.

### Bezugszeichenliste

- 10: Abdeckplatte
- 12: Wandabschnitt
- 13: gekrümmter Abschnitt
- 13': ebener Abschnitt
- 14: Umfangsrand
- 16: Stegabschnitt
- 18: Sollbruchstelle
- 20: Sollbruchstelle
- 22: Sollbruchstelle
- 26: Montageschlitz
- 28: Steg
- 30: Vorsprung
- 31: Vorsprung
- 32: Vorsprung
- 33: Vorsprung

## Patentansprüche

1. Airbagabdeckung, insbesondere für einen Seitenairbag, bestehend aus einer Abdeckplatte (10), an deren Rückseite ein umlaufender Wandabschnitt (12) angeordnet ist, der von dem Umfangsrand (14) der Abdeckplatte (10) beabstandet ist, wodurch ein vorstehender Stegabschnitt (16) gebildet ist, wobei zum Öffnen der Airbagabdeckung mindestens eine Sollbruchstelle vorgesehen ist,
dadurch **gekennzeichnet,** daß
das Öffnungsverhalten der Airbagabdeckung unabhängig von einer auf der Abdeckplatte (10) aufgebrachten Kaschierung ist.

2. Airbagabdeckung nach Anspruch 1,
dadurch **gekennzeichnet,** daß
die Sollbruchstelle (18, 20, 22) an dem Wandabschnitt (12) und/oder der Abdeckplatte (16) angeordnet und derart dimensioniert ist, daß sich bei Entfalten des Airbags die Abdeckplatte (10) zusammen mit ihrem Stegabschnitt (16) zumindest teilweise von dem Wandabschnitt (12) löst, und daß die Abdeckplatte (10) mit einer Kaschierung versehen ist, die keine Sollbruchstelle aufweist.

3. Airbagabdeckung nach Anspruch 1 oder 2,
dadurch **gekennzeichnet,** daß
die Kaschierung auch an der Unterseite des Stegabschnitts (16) befestigt ist.

4. Airbagabdeckung nach Anspruch 1, 2 oder 3,
dadurch **gekennzeichnet,** daß
die Sollbruchstelle (18, 20, 22) an dem Wandabschnitt (12) oder in dem Übergangsbereich zwischen dem Wandabschnitt (12) und der Abdeckplatte (10) angeordnet ist.

5. Airbagabdeckung nach zumindest einem der vorstehenden Ansprüche,
dadurch **gekennzeichnet,** daß
die Sollbruchstelle (18, 20, 22) an der Innenseite und/oder an der Außenseite des Wandabschnitts (12) angeordnet ist.

6. Verfahren zum Herstellen einer Airbagabdeckung nach zumindest einem der vorstehenden Ansprüche,
gekennzeichnet durch die folgenden Schritte:
- Einlegen einer Kaschierung in eine Spritzgußform;
- Einspritzen von Material unter Druck in die Form;
- Öffnen der Form; und
- Entnehmen der kaschierten Airbagabdeckung.
